# EUROPÄISCHE PATENTSCHRIFT

(11) **EP 4 363 844 B1**
(45) Veröffentlichungstag und Bekanntmachung des Hinweises auf die Patenterteilung: **06.11.2024**
(21) Anmeldenummer: 22744711.7
(22) Anmeldetag: 06.07.2022
(51) Int. Cl.: G01N 30/86, G01N 21/65, G01N 30/02

(54) **KI-BESCHLEUNIGTES ANALYSEVERFAHREN, AUSWERTUNGSEINHEIT, GASCHROMATOGRAPH, ANALYSESYSTEM UND COMPUTERPROGRAMMPRODUKT**
AI-ACCELERATED ANALYSIS METHOD, EVALUATION UNIT, GAS CHROMATOGRAPH, ANALYSIS SYSTEM AND COMPUTER PROGRAM PRODUCT
PROCÉDÉ D'ANALYSE ACCÉLÉRÉ PAR IA, UNITÉ D'ÉVALUATION, CHROMATOGRAPHE EN PHASE GAZEUSE, SYSTÈME D'ANALYSE ET PRODUIT PROGRAMME INFORMATIQUE

(30) Priorität: 26.08.2021 EP 21193262
(43) Veröffentlichungstag der Anmeldung: 08.05.2024
(73) Patentinhaber: Siemens Aktiengesellschaft, 80333 München (DE)
(72) Erfinder: HANGAUER, Andreas, 80634 München (DE); STRAUCH, Piotr, 76761 Rülzheim (DE)
(74) Vertreter: Siemens Patent Attorneys
(86) Internationale Anmeldenummer: PCT/EP2022/068710
(87) Internationale Veröffentlichungsnummer: WO 2023/025447

(56) Entgegenhaltungen:
- WO-A1-2020/105566
- WO-A1-2021/085581
- US-A1- 2010 299 078
- US-A1- 2017 074 840

## Beschreibung

Die Erfindung betrifft ein Analyseverfahren zum Ermitteln einer Zusammensetzung einer Stoffprobe, das durch eine Künstliche Intelligenz beschleunigt ist. Die Erfindung betrifft auch eine Auswertungseinheit zum Durchführen eines derartigen Verfahrens und einen Gaschromatographen, der über solch eine Auswertungseinheit verfügt. Gleichermaßen betrifft die Erfindung ein Analysesystem, das auf einer entsprechend trainierten Künstlichen Intelligenz basiert. Ferner betrifft die Erfindung ein Computerprogrammprodukt, das als eine korrespondierende Künstliche Intelligenz ausgebildet ist.

Die Patentanmeldung CN 111443160 A offenbart eine Vorrichtung, die zur Überwachung von Fermentationsprozessen oder von Abgaszusammensetzungen einsetzbar ist. Die Vorrichtung weist ein Gassensor-Array und einen Gaschromatographen auf. Darin werden Messwerte des Gassensor-Arrays mit Messwerten des Gaschromatographen über eine Datenanalyse miteinander verknüpft. Dies erfolgt unter Einbeziehung eines Maschinenlernalgorithmus. In der Patentanmeldung US-A-2017074840 wird eine Vorrichtung zum Ermitteln einer Zusammensetzung einer Stoffprobe mit mehreren Komponenten unter Verwendung der Konzentration einer ersten Komponente der Stoffprobe beschrieben.

In verschiedenen Herstellungsprozessen der chemischen Industrie, bei der Überwachung von Abgasen oder der Reinheit eines Erzeugnisses werden gaschromatographische Verfahren eingesetzt, um die Zusammensetzung einer Stoffprobe zu bestimmen. Gaschromatographische Messungen laufen für zahlreiche Prozess zu langsam ab um die Zusammensetzung der entsprechenden Stoffproben ausreichend genau zu überwachen. Der Erfindung liegt die Aufgabe zugrunde, eine Möglichkeit bereitzustellen, eine Zusammensetzung einer Stoffprobe bei hoher Messgenauigkeit beschleunigt ermitteln zu können.

Die Aufgabenstellung wird durch ein erfindungsgemäßes Verfahren zum Ermitteln einer Zusammensetzung einer Stoffprobe gelöst. Die Stoffprobe ist als Gemisch von zumindest drei Komponenten ausgebildet, deren jeweilige Konzentrationen zu bestimmen sind. Das Verfahren wird mittels eines Gaschromatographen durchgeführt, in dem die Stoffprobe durch eine Trennvorrichtung in die mindestens drei Komponenten derart fraktioniert wird, dass diese zeitlich versetzt einen Detektor erreichen. Die Stoffprobe kann als Gemisch von Gasen und/oder Flüssigkeiten ausgebildet sein. Das Verfahren umfasst einen ersten Schritt, in dem eine Konzentration einer ersten Komponente der Stoffprobe quantitativ ermittelt wird. Die erste Komponente ist hierbei die Komponente der Stoffprobe, die nach einem Durchlaufen der Trennvorrichtung den Detektor als erstes erreicht. Das quantitative Ermitteln ist als ein Messen mit dem Detektor aufzufassen. Das Ergebnis der quantitativen Erfassung der Konzentration der ersten Komponente stellt einen ersten Teilmesswert dar, der zu einer weiteren Nutzung an eine Künstliche Intelligenz weitergegeben, also ausgegeben wird.

Es folgt ein zweiter Schritt, in dem durch die Künstliche Intelligenz ein Ermitteln jeweils einer Konzentration der zweiten und dritten Komponente erfolgt. Das Ermitteln der Konzentration der zweiten und dritten Komponente erfolgt in der Künstlichen Intelligenz anhand des ersten Teilmesswerts. Zum Ermitteln der Konzentrationen der jeweils zweiten und dritten Komponente dient der erste Teilmesswert als Eingabewert für die Künstliche Intelligenz, die hieraus die Konzentrationen der zweiten und dritten Komponente berechnet. Diese Berechnung kann als eine erfahrungsbasierte Schätzung ausgebildet sein, die auf historischen Daten zu den Konzentrationen der ersten, zweiten und dritten Komponente beruht.

Das Verfahren umfasst auch einen dritten Schritt, in dem die Konzentration der zweiten Komponente der Stoffprobe quantitativ ermittelt wird. Die zweite Komponente ist dabei die Komponente der Stoffprobe, die den Detektor nach der ersten Komponente erreicht und von diesem quantitativ erfasst wird. Das Ergebnis dieses quantitativen Erfassens ist als zweiter Teilmesswert aufzufassen, der zu einer weiteren Nutzung an die Künstliche Intelligenz weitergeleitet wird, also ausgegeben wird. Der Künstlichen Intelligenz liegen dann der erste und zweite Teilmesswert zur Verfügung, die gemeinsam weiter genutzt werden.

In einem vierten Schritt des Verfahrens erfolgt ein Ermitteln der Konzentration der dritten Komponente der Stoffprobe mittels der Künstlichen Intelligenz. Der Künstlichen Intelligenz steht mit dem ersten und zweiten Teilmesswert eine breitere Basis an Messdaten zur Verfügung, so dass für die Künstliche Intelligenz weniger Konzentrationen zu ermitteln sind. Der vierte Schritt wird anhand des ersten und zweiten Teilmesswerts durchgeführt. Infolgedessen ist die Konzentration der dritten Komponente mit erhöhter Genauigkeit möglich. Der erste bis vierte Schritt des Verfahrens erfolgen erfindungsgemäß innerhalb eines ersten Messzyklus des Gaschromatographen, in dem die Stoffprobe untersucht wird. Der erste Messzyklus beginnt mit einem Einbringen der Stoffprobe in die Trennvorrichtung und endet, wenn eine neue Stoffprobe in die Trennvorrichtung injiziert wird.

Das erfindungsgemäße Verfahren ist dadurch dazu geeignet, zur zweiten und dritten Komponente während des ersten Messzyklus mehrmals eine Konzentration anzugeben, die durch die Künstliche Intelligenz ermittelt wird. Während des Messzyklus werden die von der Künstlichen Intelligenz ermittelten Konzentrationen immer genauer. Die Erfindung basiert unter anderem auf der überraschenden Erkenntnis, dass mittels einer Künstlichen Intelligenz während des ersten Messzyklus fehlende Teilmesswerte vorübergehend hinreichend genau durch berechnete Konzentrationen ersetzbar sind. Jedes Mal, wenn ein Teilmesswert erfasst wird bzw. bei jedem Rechendurchgang der Künstlichen Intelligenz ist somit eine Zusammensetzung der Stoffprobe angebbar. Dies führt unter anderem zur überraschenden Wirkung, dass pro Messzyklus umso mehr Zusammensetzungen ermittelt werden, je mehr Komponenten die Stoffprobe aufweist, die zu detektieren sind. Insgesamt wirkt die Komplexität als zu lösenden Analyseaufgabe als Beschleunigung für die eingesetzte Künstliche Intelligenz. Dies erlaubt beispielsweise ein beschleunigtes Erkennen einer nicht bestimmungsgemäßen Zusammensetzung der Stoffprobe. Ebenso sind mit dem beanspruchten Verfahren automatisierte Herstellungsverfahren umsetzbar, bei denen die Zusammensetzung eines Prozessmediums kritisch und gleichzeitig empfindlich gegen Störeinflüsse ist. Ferner wird die beschleunigte Ermittlung der Zusammensetzung der Stoffprobe ohne zusätzlichen Hardwareaufwand erreicht und kann auch bei bestehenden Gaschromatographen im Zuge einer Nachrüstung, beispielsweise ein Ersetzen einer Auswertungseinheit, in einfacher Weise implementiert werden.

In einer Ausführungsform des beanspruchten Verfahrens ist die Künstliche Intelligenz als sogenanntes Neuronales Netz, ein Statistikmodul oder eine Kombination hieraus ausgebildet sein. Unter einem Neuronalen Netz ist insbesondere ein Algorithmus zu verstehen, der dazu geeignet ist, aus unvollständigen und/oder mehrdeutigen Eingabewerten zumindest einen Ausgabewert zu ermitteln, der ausgehend von den Eingabewerten als das wahrscheinlichste zutreffende Resultat anzusehen ist. Neuronale Netze sind über einen sogenannten Trainingsdatensatz weitestgehend eigenständig für ihre vorgesehene Aufgabe konfigurierbar. Ebenso können Neuronale Netze im laufenden Betrieb durch gesammelte Daten eigenständig weiter trainierbar. Beispielsweise kann das Neuronale Netz im beanspruchten Verfahren bereits durch einen Trainingsdatensatz für das Verfahren eingerichtet sein und sich währenddessen kontinuierlich weiterentwickeln. Hierdurch ist die Aussagekraft der Künstlichen Intelligenz in einfacher Weise anwendungsspezifisch steigerbar. Für jeden Schritt, in dem Konzentrationen von Komponenten der Stoffprobe zu ermitteln sind, kann das gleiche Neuronale Netz eingesetzt werden, bei dem mit jedem quantitativ ermittelten Teilmesswert Knoten des Neuronalen Netzes selbsttätig angepasst werden. Hierdurch wird über einen gesamten Messzyklus hinweg ein erhöhtes Maß an Homogenität im Verhalten der Künstlichen Intelligenz erreicht werden. Alternativ kann auch für jeden der skizzierten Schritte ein separates Neuronales Netz als Künstliche Intelligenz eingesetzt werden. Hierdurch wird für jeden entsprechenden Schritt eine erhöhte schrittspezifische Anpassung der Künstlichen Intelligenz erzielt. Alternativ oder ergänzend kann die Künstliche Intelligenz im beanspruchten Verfahren auch als Fuzzy-Logik ausgebildet sein. Unter dem Statistikmodul ist beispielsweise eine Recheneinheit zur Durchführung statistischer Auswertungen zu verstehen, beispielsweise mittels Bayesscher Statistik, Least-Squares-Regression oder ähnlichen numerischen Verfahren.

Ferner kann die Künstliche Intelligenz durch einen Trainingsdatensatz trainiert sein. Der Trainingsdatensatz kann Daten von historischen Ermittlungen von Zusammensetzungen von Stoffproben aufweisen. Beispielsweise können die Daten der historischen Ermittlungen Werte für zumindest einen der Teilmesswerte, insbesondere den ersten, zweiten und/oder drittem Teilmesswert, umfassen. Insbesondere können die Daten von den historischen Ermittlungen von Zusammensetzung auf bautypengleichen oder bautypenähnlichen Gaschromatographen ermittelt sein. Ein bautypengleicher Gaschromatograph hat dieselben technischen Eigenschaften wie der Gaschromatograph, auf dem das beanspruchte Verfahren durchgeführt wird. Ein bautypenähnlicher Gaschromatograph ist dem Gaschromatographen, auf dem das beanspruchte Verfahren durchgeführt wird, insoweit technisch ähnlich, dass die jeweiligen Teilmesswerte übertragbar sind.

Des Weiteren kann das beanspruchte Verfahren auch einen fünften Schritt umfassen, in dem ein quantitatives Ermitteln Konzentration der dritten Komponente der Stoffprobe erfolgt. Dazu wird die dritte Komponente wie die erste und zweite Komponente mittels des Detektors erfasst. Weiter wird im fünften Schritt die so quantitativ ermittelte Konzentration der dritten Komponente als dritter Teilmesswert ausgegeben. Insbesondere kann der dritte Teilmesswert an die Künstliche Intelligenz ausgegeben werden. Die im vierten Schritt durch die Künstliche Intelligenz ermittelte Konzentration der dritten Komponente ist damit anhand des dritten Teilmesswerts überprüfbar. Beispielsweise ist durch eine entsprechende Markierung an einer graphischen Benutzeroberfläche für einen Benutzer des Gaschromatographen hervorhebbar, dass nunmehr eine vollständig auf Teilmesswerte beruhende Zusammensetzung angezeigt wird. Ferner kann nach dem fünften Schritt das Ende des ersten Messzyklus erkannt werden und ein darauffolgender zweiter Messzyklus eingeleitet werden. Hierdurch werden inaktive Phasen im beanspruchten Verfahren minimiert.

Darüber hinaus können im beanspruchten Verfahren Teilmesswerte und korrespondierende Konzentrationen von entsprechenden Komponenten, die über die Künstliche Intelligenz ermittelt sind, der Künstlichen Intelligenz zu einem maschinellen Lernen zur Verfügung gestellt werden. Die Teilmesswerte und die korrespondierenden Konzentrationen sind aufeinander bezogen in einem Datensatz speicherbar, der als Trainingsdatensatz der Künstlichen Intelligenz dienen kann oder einen solchen ergänzen kann. Je Durchgang des Verfahrens, also je Messzyklus, ist eine relativ kompakte Datenmenge bereitstellbar, die zum maschinellen Lernen, und damit der eigenständigen Weiterentwicklung der Künstlichen Intelligenz besonders geeignet ist. Folglich ist das beanspruchte Verfahren zu einer besonders zielgerichteten Weiterentwicklung ausgebildet.

Ferner kann im beanspruchten Verfahren ein sechster Schritt durchgeführt werden, in dem eine Konzentration eines Rests, also einer Rest-Komponente, der Stoffprobe erfasst werden. Der Rest kann hierbei eine oder mehrere Komponenten umfassen und gehört nicht zu den mittels des Detektors oder der Künstlichen Intelligenz erfassten Komponenten der Stoffprobe. Die Konzentration des Rests ergibt sich aus einer Differenz zwischen der Summe an Konzentrationen, die über den Detektor bzw. die Künstliche Intelligenz ermittelt werden, und einer Gesamtkonzentration der Stoffprobe. Darüber hinaus kann die so ermittelte Konzentration des Rests, also der Restkomponente, mit einem einstellbaren Schwellenwert verglichen werden. Wenn die Konzentration des Rests den einstellbaren Schwellenwert übersteigt, insbesondere betragsmäßig übersteigt, kann eine Warnung ausgegeben werden. Der Schwellenwert kann beispielsweise vom Benutzer, einer Tabelle oder einem Algorithmus vorgegeben werden. Das beanspruchte Verfahren weist dadurch eine an den vorliegenden Anwendungsfall anpassbare Toleranz gegen dem nicht näher analysierten Rest auf. Das beanspruchte Verfahren ist dadurch auch in Anwendungen mit störungsbehafteten Betriebsbedingungen einsetzbar, in denen unerwartete Kontaminationen der Stoffproben eintreten können. Insbesondere kann die dritte Komponente der Stoffprobe die Rest-Komponente sein.

In einer weiteren Ausführungsform des beanspruchten Verfahrens kann die über die Künstliche Intelligenz ermittelte Konzentration der zweiten und/oder dritten Komponente der Stoffprobe mit einer Fehlerspanne und/oder Konfidenzintervall ausgegeben werden. Konzentrationen, die nur durch die Künstliche Intelligenz ermittelt sind, aber noch nicht durch Teilmesswerte gestützt sind, sind prinzipbedingt mit einer Unsicherheit behaftet. Durch ein Ausgeben der zugehörigen Fehlerspanne bzw. des Konfidenzintervalls kann ein Benutzer und/oder ein Steuerungssystem entscheiden, ob auf Basis der so ermittelten Zusammensetzung weitergehende Entscheidungen zu treffen sind oder ob weitere Teilmesswerte abzuwarten sind. Das beanspruchte Verfahren ist dadurch auch mit hinreichender Zuverlässigkeit in störungsempfindlichen Anwendungen einsetzbar. Die Dauer, bis eine ermittelte Zusammensetzung der Stoffprobe hinreichend zuverlässig bzw. präzise ist, wird durch das beanspruchte Verfahren insgesamt verkürzt.

Ebenso kann im beanspruchten Verfahren zwischen einer Konzentration, die von der Künstlichen Intelligenz ermittelt wird, und dem korrespondierenden Teilmesswert eine Differenz ermittelt werden. Wenn die Differenz einen einstellbaren Anomalieschwellenwert betragsmäßig übersteigt, kann eine Warnung ausgegeben werden. Die Warnung kann an einen Benutzer oder an ein Steuerungsprogramm ausgegeben werden. Hierdurch ist beispielsweise ein abruptes Steigen oder Sinken einer Konzentration einer Komponente feststellbar. Eine solche kann durch ein geschlossenes Zufuhrventil, ein Stoppen eines vorgeschalteten Prozesses, aus dem die Stoffprobe entnommen ist, oder durch einen Defekt am Detektor und/oder an der Auswertungseinheit hervorgerufen sein. Das beanspruchte Verfahren kann auch dazu ausgebildet sein, anhand der Künstlichen Intelligenz oder einem mit der Künstlichen Intelligenz gekoppelten separaten Verfahren eine Ursache einer derartigen Anomalie zu erkennen. Dies kann beispielsweise mittels einer Erfahrungsdatenbank erfolgen. Ferner kann beispielsweise der Benutzer durch geeignetes Einstellen des Anomalieschwellenwerts ein Ausgeben unnötiger Warnungen minimieren. Das beanspruchte Verfahren ist dadurch auch geeignet, den zuverlässigen Betrieb einer Automatisierungsanlage zu gewährleisten, in der das Verfahren eingesetzt wird und führzeitig Defekte zu identifizieren.

Darüber hinaus kann im beanspruchten Verfahren der zweite und/oder vierte Schritt unter Berücksichtigung eines Prozessparameters durchgeführt werden. Der Prozessparameter kann beispielsweise eine Temperatur, ein Druck ein pH-Wert, eine elektrische Größe wie Impedanz, Leitfähigkeit und/oder eine optische Größe sein, die im Prozessmedium vorliegen, der die Stoffprobe entnommen ist, oder in einem Prozess vorliegen, durch den die Stoffprobe hergestellt wird. Beispielsweise kann bei einem Abgas, das als Stoffprobe dient, die zugehörige Verbrennungstemperatur als Prozessparameter durch die Künstliche Intelligenz berücksichtigt werden, also als Eingangsgröße beim Ermitteln von Konzentrationen von Komponenten genutzt werden. Die Verbrennungstemperatur bestimmt bei einer Vielzahl an Brennstoffen, in welchen Konzentrationen Kohlendioxid oder Stickoxide entstehen. Das beanspruchte Verfahren ist hierdurch in der Lage, sich dynamisch an eine vorliegende Betriebssituation anzupassen. Dementsprechend ist das beanspruchte Verfahren auch zur Regelung oder Steuerung von empfindlichen Prozessen geeignet, bei denen schnelle Reaktionen geboten sind.

Des Weiteren kann im beanspruchten Verfahren während des ersten Messzyklus für zumindest eine Komponente der Stoffprobe ein Zwischenmesswert von einer Hilfsanalysevorrichtung bereitgestellt werden. Unter einer Hilfsanalysevorrichtung ist beispielsweise ein Kontinuierlicher Gasanalysator, ein Raman-Spektrometer, eine Laserspektrometer, ein nichtdispersiver Infrarotsensor, kurz NDIR-Sensor, oder ein Massenspektrometer zu verstehen. Derartige Hilfsanalysevorrichtungen bieten gegenüber einem Gaschromatographen eine reduzierte Messgenauigkeit. Durch die Hilfsanalysevorrichtung kann zwischen einem Ermitteln einer Konzentration einer Komponente über die Künstliche Intelligenz und dem quantitativen Erfassen, beispielsweise mittels des Detektors, ein Messwert bereitgestellt werden, der als Hilfsmesswert aufzufassen ist. Dadurch ist eine von der Künstlichen Intelligenz ermittelte Konzentration einer Komponente während des Verfahrens plausibilisierbar. Ferner können Hilfsmesswerte auch zum maschinellen Lernen der Künstlichen Intelligenz zur Verfügung gestellt werden. Insbesondere können die Konzentrationen aller Komponenten der Stoffprobe, die im beanspruchten Verfahren durch die Künstliche Intelligenz ermittelt bzw. über den Detektor gemessen werden, durch die Hilfsanalysevorrichtung ermittelt werden. Hierdurch ist das beanspruchte Verfahren weiter unterstützbar und eventuelle Defekte am Gaschromatographen identifizierbar.

In einer Ausführungsform des beanspruchten Verfahrens kann die Hilfsanalysevorrichtung eine Messtaktdauer aufweisen, die kürzer ist als der erste Messzyklus. Mittels der Hilfsanalysevorrichtung sind damit während eines Messzyklus mehrere Messungen durchführbar, also je Komponente zwei oder mehr Hilfsmesswerte bereitstellbar. Durch die Künstliche Intelligenz werden nicht dann die Konzentrationen für bisher nicht gemessene Komponenten ermittelt, sondern auch dann, wenn zumindest ein neuer Hilfsmesswert vorliegt. Dadurch können je Messzyklus mehr Rechendurchgänge mit der Künstlichen Intelligenz durchgeführt werden, durch die die Ermittlungen der noch nicht gemessenen Konzentrationen präziser wird.

Die eingangs dargelegte Aufgabenstellung wird auch durch eine erfindungsgemäße Auswertungseinheit gelöst. Die Auswertungseinheit ist dazu ausgebildet, mit einer Analysevorrichtung zusammenzuwirken, die dazu dient, eine Zusammensetzung einer Stoffprobe zu ermitteln. Dazu ist die Auswertungseinheit im montierten Zustand mit zumindest einem Detektor der Analysevorrichtung verbunden und dazu geeignet, vom Detektor Messsignale zu empfangen. Erfindungsgemäß ist die Auswertungseinheit dazu ausgebildet, zumindest eine Ausführungsform des oben skizzierten Verfahrens durchzuführen. Hierzu kann die Auswertungseinheit beispielsweise mit einem Computerprogrammprodukt ausgestattet sein, das das entsprechende Verfahren umsetzt. Die Auswertungseinheit kann ferner als Kombination mehrerer Hardwareplattformen ausgebildet sein, die kommunikativ miteinander verbunden sind und zur Durchführung des entsprechenden Verfahrens zusammenwirken, beispielsweise in einer Computer-Cloud. Die erfindungsgemäße Auswertungseinheit kann auch im Zuge eines Upgrades einer bestehenden Anlage nachgerüstet werden. Dadurch ist das erfindungsgemäße Verfahren in einfacher Weise auf bestehende Anlagen übertragbar.

Gleichermaßen wird die zugrundeliegende Aufgabe durch einen erfindungsgemäßen Gaschromatographen gelöst, der dazu ausgebildet ist, eine Zusammensetzung einer Stoffprobe zu ermitteln. Der Gaschromatograph umfasst dazu eine Trennvorrichtung, beispielsweise eine sogenannte Trennsäule, und einen Detektor. Der Detektor kann beispielsweise als Flammenionisationsdetektor, als Wärmeleitfähigkeitsdetektor, als Photoionisationsdetektor, als Massenspektrometer oder Ionen-Mobilitäts-Spektrometer ausgebildet sein. Der Detektor ist mit einer Auswertungseinheit verbunden, die dazu ausgebildet ist, Messsignale vom Detektor zu empfangen und auszuwerten. Erfindungsgemäß ist die Auswertungseinheit gemäß einer der oben dargestellten Ausführungsformen ausgebildet. Mittels der erfindungsgemäßen Auswertungseinheit ist das oben beschriebene Verfahren auf dem erfindungsgemäßen Gaschromatographen umsetzbar. Die Messgeschwindigkeit, also die Frequenz, mit der Zusammensetzungen der zu messenden Stoffprobe ausgegeben werden, ist dadurch gesteigert. Gleichzeitig wird die erhöhte Messgenauigkeit eines Gaschromatographen beibehalten. Der erfindungsgemäße Gaschromatograph erfordert keine zusätzlichen Hardwarekomponenten, so dass die skizzierten technischen Vorzüge wirtschaftlich erzielbar sind.

Die oben dargestellte Aufgabenstellung wird ebenso durch ein erfindungsgemäßes Analysesystem gelöst, das dazu ausgebildet ist, eine Zusammensetzung einer Stoffprobe zu ermitteln. Das Analysesystem umfasst eine Hilfsanalysevorrichtung, die als Raman-Spektrometer, als Kontinuierlicher Gasanalysator, als Laserspektrometer, als nichtdispersiver Infrarotsensor, kurz NDIR-Sensor, oder als Massenspektrometer ausgebildet ist. Die Hilfsanalysevorrichtung ist mit einer Auswertungseinheit verbunden, die dazu geeignet ist, Messsignale von der Hilfsanalysevorrichtung zu empfangen und auszuwerten. In der Auswertungseinheit ist eine Künstliche Intelligenz ausführbar gespeichert, mittels der die Zusammensetzung der Stoffprobe zu ermitteln ist. Die Künstliche Intelligenz ist erfindungsgemäß durch ein Verfahren nach einer der oben beschriebenen Ausführungsformen trainiert. Darunter ist zu verstehen, dass das Erkennungsverhalten der Künstlichen Intelligenz durch einen Trainingsdatensatz vorgegeben ist, der durch das oben beschriebene Verfahren gewonnen ist. Insbesondere ist die Künstliche Intelligenz dazu geeignet, von der Hilfsanalysevorrichtung empfangene Messsignale als Teilmesswerte im Sinne des erfindungsgemäßen Verfahrens zu nutzen. Die Erfindung basiert unter anderem auf der überraschenden Erkenntnis, dass mittels einer solchen Künstlichen Intelligenz ein virtueller Gaschromatograph realisierbar ist, der die Messgenauigkeit eines realen Gaschromatographen aufweist. Der Gaschromatograph gemäß dem beanspruchten Verfahren ist in solchen Fällen also ein virtueller Gaschromatograph. Hierbei erfordert das erfindungsgemäße Analysesystem jedoch nur eine oder mehrere Hilfsanalysevorrichtungen, die als solche eine geringere Messgenauigkeit aufweisen als ein Gaschromatograph. Das Analysesystem kann damit frei von einem Gaschromatographen, also einem realen Gaschromatographen, ausgebildet sein. Die technischen Vorzüge eines Gaschromatographen sind mit dem erfindungsgemäßen Analysesystem, das als virtueller Gaschromatograph aufgefasst werden kann, auch mit einfacherer Hardware in kosteneffizienter Weise erzielbar.

Ferner wird die eingangs beschriebene Aufgabenstellung durch ein erfindungsgemäßes Computerprogrammprodukt gelöst, das zum Ermitteln einer Zusammensetzung einer Stoffprobe ausgebildet ist. Das Computerprogrammprodukt umfasst eine Künstliche Intelligenz, die beispielsweise als Neuronales Netz ausgebildet sein kann, und einen Trainingsdatensatz. Der Trainingsdatensatz ist dazu geeignet, durch sogenanntes maschinelles Lernen ein Verhalten der Künstlichen Intelligenz beim Ermitteln der Zusammensetzung der Stoffprobe vorzugeben. Der Trainingsdatensatz kann während des Betriebs des Computerprogrammprodukts durch zusätzliche Werte, insbesondere Teilmesswerte und korrespondierende ermittelte Konzentrationen von Komponenten der Stoffprobe, erweitert werden. Erfindungsgemäß ist das Computerprogrammprodukt dazu ausgebildet, zumindest eine Ausführungsform des oben dargelegten Verfahrens umzusetzen. Insbesondere ist das Computerprogrammprodukt dazu geeignet, als Künstliche Intelligenz im Sinne des Verfahrens zu dienen. Das Computerprogrammprodukt kann dabei monolithisch ausgebildet sein, also auf einer Hardwareplattform ausführbar sein. Alternativ kann das Computerprogrammprodukt eine Mehrzahl an Teilprogrammen umfassen, die kommunikativ Zusammenwirken, um die angestrebte Funktionalität zu verwirklichen, beispielsweise in einer Computer-Cloud. Das Computerprogrammprodukt kann ganz oder teilweise als Software ausgebildet sein oder festverdrahtet, beispielsweise in einem Chip, Mikrocontroller oder FPGA. Das erfindungsgemäße Computerprogrammprodukt kann in einfacher Weise für eine bestehende Auswertungseinheit bereitgestellt werden, so dass das erfindungsgemäße Verfahren auch auf bestehenden Auswertungseinheiten implementierbar ist.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der unterschiedlichen Ausführungsformen sind untereinander und mit den oben skizzierten Merkmalen kombinierbar. Es zeigen im Einzelnen:
- FIG 1: den Aufbau einer Ausführungsform des beanspruchten Gaschromatographen;
- FIG 2: einen Ablauf einer ersten Ausführungsform des beanspruchten Verfahrens;
- FIG 3: einen Ablauf einer zweiten Ausführungsform des beanspruchten Verfahrens;
- FIG 4: eine Ausführungsform des beanspruchten Analysesystems.

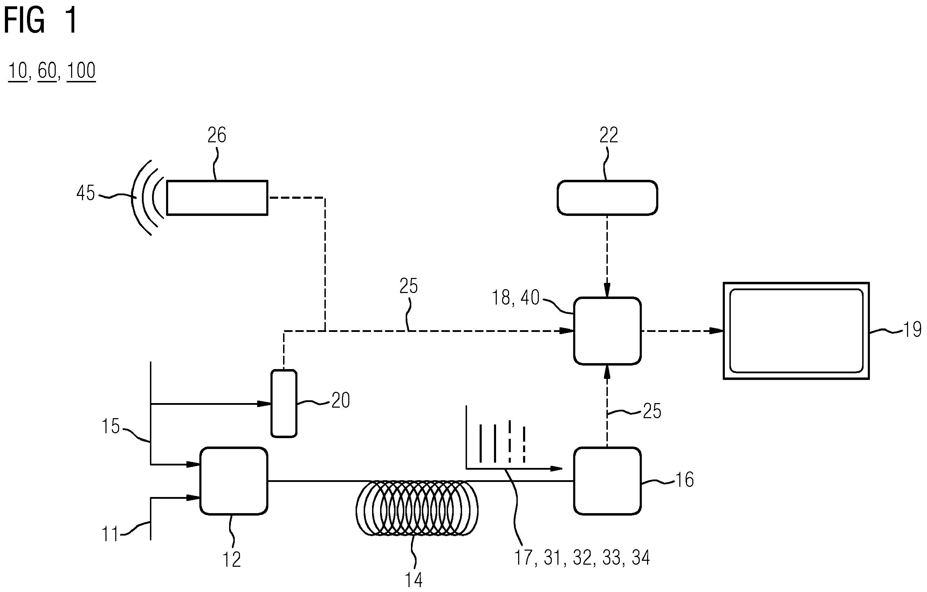

Der Aufbau einer Ausführungsform des beanspruchten Gaschromatographen 10 ist in FIG 1 schematisch dargestellt. Der Gaschromatograph 10 umfasst eine Injektionsvorrichtung 12, in die ein Trägergas 11 einleitbar ist. Das Trägergas 11 ist mit einer Stoffprobe 15 in Kontakt um diese in eine Trennvorrichtung 14 einzubringen, die als Trennsäule ausgebildet ist. Durch die Trennvorrichtung 14 wird die Stoffprobe 15 in einzelne Komponenten 31, 32, 33, 34 aufgeteilt. Die Komponenten 31, 32, 33, 34 erreichen zeitlich nacheinander einen Detektor 16, der dazu ausgebildet ist, die einzelnen Komponenten 31, 32, 33, 34 quantitativ zu erfassen. Hierzu werden vom Detektor 16 Messsignale 25 an eine Auswertungseinheit 18 ausgegeben, die über eine Künstliche Intelligenz 40 verfügt. Die Künstliche Intelligenz 40 dient dazu, die Messsignale 25 vom Detektor 16 auszuwerten umso die Zusammensetzung 17 der Stoffprobe 15 zu bestimmen. Zu diesem Zweck ist die Künstliche Intelligenz 40 dazu ausgebildet, zumindest eine Ausführungsform des beanspruchten Verfahrens 100 umzusetzen.

Der Gaschromatograph 10 ist mit einer Hilfsanalysevorrichtung 20 ausgestattet, die als Kontinuierlicher Gasanalysator oder Raman-Spektrometer ausgebildet sein kann. Der Hilfsanalysevorrichtung 20 wird die gleiche Stoffprobe 15 wie der Injektionsvorrichtung 12 zugeführt. Die Hilfsanalysevorrichtung 20 ist dazu geeignet, die Zusammensetzung 17 der Stoffprobe 15 zu ermitteln, jedoch mit einer geringeren Präzision als der Detektor 16. Die Hilfsanalysevorrichtung 20 ist hingegen dazu geeignet, derartige Ermittlungen der Zusammensetzung 17 der Stoffprobe 15 schneller durchzuführen als der Detektor 16. Dementsprechende Messsignale 25 sind von der Hilfsanalysevorrichtung 20 an die Auswertungseinheit 18 ausgebbar zu einem Unterstützen der Künstlichen Intelligenz 40. Zusätzlich ist die Auswertungseinheit 40 mit einem Sensor 26 gekoppelt, durch den ein Prozessparameter 45 erfassbar ist. Der Prozessparameter 45 beeinflusst die Zusammensetzung 17 der Stoffprobe 15. Messsignale 25, die den Prozessparameter 45 wiedergeben, werden vom Sensor 26 an die Auswertungseinheit 18 ausgegeben, um die Künstliche Intelligenz 40 zu unterstützen.

Die Künstliche Intelligenz 40 ist mit einem Trainingsdatensatz 22 koppelbar, durch den die Künstliche Intelligenz 40 in die Lage versetzt wird, aus Messsignalen 25 vom Detektor 16, der Hilfsanalysevorrichtung 20 und dem Sensor 26 die Zusammensetzung 17 der Stoffprobe 15 zu ermitteln. Der Trainingsdatensatz 22 enthält hierzu Daten über historische Ermittlungen von Zusammensetzungen 17 von Stoffproben 15 auf bautypengleichen oder bautypenähnlichen Gaschromatographen 10. Der Trainingsdatensatz 22 kann auch mit Messsignalen 25 und Resultaten von selbst ausgeführten Ermittlungen von Zusammensetzungen 17 von Stoffproben 15 ergänzt werden. Die ermittelten Zusammensetzung 17 sind auf einer Ausgabeeinheit 19, die als Bildschirm ausgebildet ist, ausgegeben werden. Die Künstliche Intelligenz 40 und der Trainingsdatensatz 22 bilden zusammen ein Computerprogrammprodukt 60, durch das die Umsetzung des beanspruchten Verfahrens 100 ermöglicht wird.

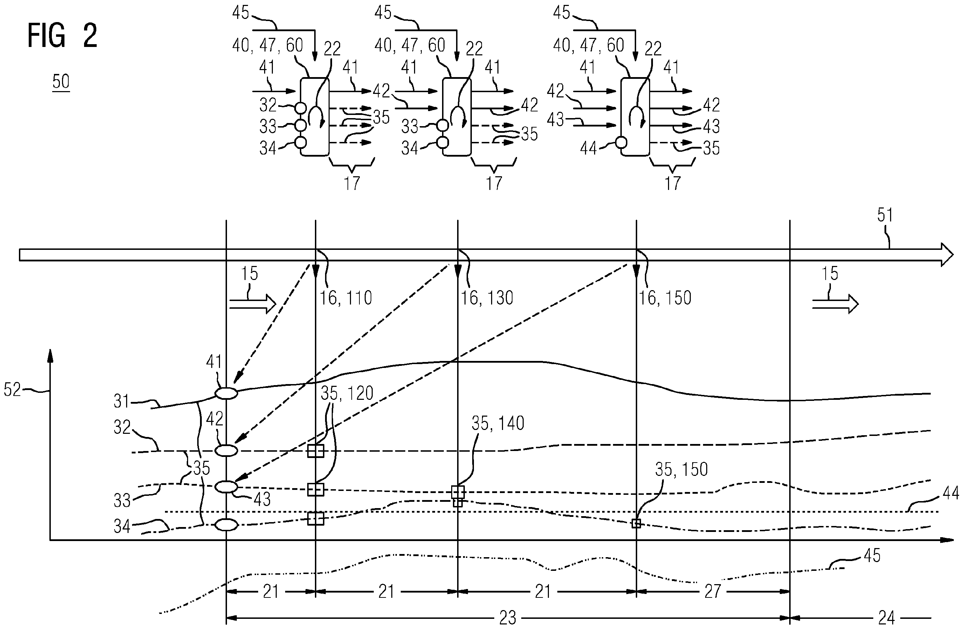

In FIG 2 ist ein Ablauf einer ersten Ausführungsform des beanspruchten Verfahrens 100 in einem Diagramm 50 dargestellt, das eine horizontale Zeitachse 51 aufweist. Im unteren Teil weist das Diagramm 50 eine vertikale Größenachse 52 auf, die einen Verlauf von Konzentrationen 35 und einen Verlauf eines Prozessparameters 45 darstellt. Im Diagramm 50 ist ein erster Messzyklus 23 dargestellt, in dem die Zusammensetzung 17 einer Stoffprobe 15 ermittelt wird, die eine erste Komponente 31, eine zweite Komponente 32, eine dritte Komponente 33 und eine Rest-Komponente 34 aufweist. Der Beginn des ersten Messzyklus 23 ist durch ein Injizieren der Stoffprobe 15 in eine Trennvorrichtung 14, wie in FIG 1 gezeigt, definiert. Nach einer Retentionszeit 21, die für die erste Komponente 31 in Kombination mit der Trennvorrichtung 14 charakteristisch ist, erreicht diese den Detektor 16 und wird in einem ersten Schritt 110 quantitativ erfasst. Das Resultat dieses Erfassens stellt einen ersten Teilmesswert 41 dar, der die Konzentration 35 der ersten Komponente 31 zu Beginn des ersten Messzyklus 23 wiedergibt. Der erste Teilmesswert 41 wird im ersten Schritt 110 auch an eine Künstliche Intelligenz 40 ausgegeben, die als Neuronales Netz 47 ausgebildet ist und den ersten Teilmesswert 41 als Eingabe nutzt.

Es folgt ein zweiter Schritt 120, in dem durch die Künstliche Intelligenz 40 basierend auf dem ersten Teilmesswert 41 die Zusammensetzung 17 der Stoffprobe 15 ermittelt wird. Wie in FIG 2 durch die leeren Kreise versinnbildlicht, liegen der Künstlichen Intelligenz 40 zum Zeitpunkt des ersten Schritts 110 keine Teilmesswerte für die zweite Komponente 32, die dritte Komponente 33 oder die Rest-Komponente 34 vor. Die Konzentrationen 35 der zweiten Komponente 32, der dritten Komponente 33 und der Rest-Komponente 34 werden im zweiten Schritt 120 mittels der Künstlichen Intelligenz 40, die durch einen Trainingsdatensatz 22 trainiert ist, ermittelt. Beim Ermitteln im zweiten Schritt 120 wird der Prozessparameter 45, der wie in FIG 1 gezeigt, durch einen Sensor 26 ermittelt wird, mitberücksichtigt. Nach Abschluss des zweiten Schritts 120 liegt damit ein Resultat für die Zusammensetzung 17 der Stoffprobe 15 vor, die mit dem ersten Teilmesswert 41 auf einer realen Messung mit dem Detektor 16 basiert und drei Konzentrationen 35, die sich aus der Künstlichen Intelligenz 40 ergeben. Diese im zweiten Schritt 120 ermittelte Zusammensetzung 17 ist über eine Ausgabeeinheit 19 ausgebbar.

Nach einem Ablauf einer weiteren Dauer, die durch eine Retentionszeit 21 der zweiten Komponente 32 in der Trennvorrichtung 14 charakterisiert ist, wird die zweite Komponente 32 durch den Detektor 16 quantitativ erfasst. Das quantitative Erfassen der zweiten Komponente 32 erfolgt in einem dritten Schritt 130. Durch das quantitative Erfassen im dritten Schritt 130 liegt ein zweiter Teilmesswert 42 vor, der die Konzentration 35 der zweiten Komponente 32 zu Beginn des ersten Messzyklus 23 wiedergibt. Der zweite Teilmesswert 42 wird hierbei an die Künstliche Intelligenz 40 ausgegeben, die diesen als weiteren Eingabe nutzt. Es folgt ein vierter Schritt 140, in dem der Künstlichen Intelligenz 40 der erste und zweite Teilmesswert 41, 42 vorliegen, jedoch keine Angaben über die Konzentrationen 35 der dritten Komponente 33 oder der Rest-Komponente 34, wie durch die leeren Kreise symbolisiert. Im vierten Schritt 14 werden über die Künstliche Intelligenz 40 basierend auf dem ersten und zweiten Teilmesswert 41, 42 die Konzentration 35 der dritten Komponente 33 und der Rest-Komponente 34 ermittelt. Hierbei stützt sich die Künstliche Intelligenz 40 auf ihren Trainingsdatensatz 22 und den Prozessparameter 45. Im vierten Schritt 140 wird eine Zusammensetzung 17 der Stoffprobe 15 zu Beginn des ersten Messzyklus 23 ermittelt, die auf den ersten und zweiten Teilmesswert 41, 42 beruht und durch Konzentrationen 35 für die dritte Komponente 33 und die Rest-Komponente 34 ergänzt werden, die durch die Künstliche Intelligenz 35 ermittelt sind. Dadurch, dass im vierten Schritt 140 bereits zwei Teilmesswerte 41, 42 vorliegen, sind die Konzentrationen 35 der dritten Komponente 33 und der Rest-Komponente 34 mit erhöhter Genauigkeit ermittelbar, insbesondere im Vergleich zum zweiten Schritt 120. Die im vierten Schritt 140 ermittelte Zusammensetzung 17 ist ebenfalls über eine Ausgabeeinheit 19 des Gaschromatographen 10 ausgebbar.

Analog zum ersten und dritten Schritt 110, 130 wird nach dem vierten Schritt 140 auch ein fünfter Schritt 150 durchgeführt, in dem eine Konzentration 35 der dritten Komponente 33 mittels des Detektor 16 ermittelt wird. Das Resultat des fünften Schritts 150 wird als dritter Teilmesswert 43 an die Künstliche Intelligenz 40 weitergeleitet, diesen als Eingabe nutzt. Unter Berücksichtigung des ersten, zweiten und dritten Teilmesswerts 41, 42, 43 wird von der Künstlichen Intelligenz 40 unter Einbeziehung des Prozessparameters 45 im fünften Schritt 150 auch eine Konzentration 35 für die Rest-Komponente 44 ermittelt. Hieraus ergibt sich eine Zusammensetzung 17 der Stoffprobe 15, die drei Teilmesswerte 41, 42, 43 umfasst und eine durch die Künstliche Intelligenz 40 ermittelte Konzentration 35 für die Rest-Komponente 34. Die so erhaltene Zusammensetzung 17 ist ebenfalls über die Ausgabeeinheit 19 des Gaschromatographen 10 ausgebbar.

Beim Ermitteln der Konzentration der Rest-Komponente 34 wird während zumindest einem der Schritte 110, 120, 130, 140, 150 ein einstellbarer Schwellenwert 44 berücksichtigt. Wenn die Konzentration 35 der Rest-Komponente 34 den einstellbaren Schwellenwert 44 übersteigt, wird eine Warnung ausgegeben, beispielsweise über die Ausgabeeinheit 19 an einen Benutzer. An den fünften Schritt 150 schließt sich eine inaktive Phase 27 an, in der keine weiteren Messungen mittels des Detektors 16 oder Ermittlungen mit der Künstlichen Intelligenz 40 erfolgen. Das Eintreten der inaktiven Phase 27 ist dadurch erkennbar, dass für die Zusammensetzung 17 der Stoffprobe 15 ein Resultat vorliegt, das nicht mehr durch zusätzliche Messungen mit dem Detektor 16 weiter präzisierbar ist. Während der inaktiven Phase 27 kann beispielsweise ein Spülen der Trennvorrichtung 14 erfolgen. Alternativ kann die inaktive Phase 27 durch ein Injizieren einer neuen Stoffprobe 15 verkürzt werden. Durch das Injizieren einer neuen Stoffprobe 15 wird ein zweiter Messzyklus 24 eingeleitet, in dem die beschriebenen Schritte 110, 120, 130, 140, 150 aus dem ersten Messzyklus 23 erneut durchführbar sind. Gegenüber bekannten Lösungen werden im ersten Messzyklus 23 für die Zusammensetzung 17 der Stoffprobe 15 drei Resultate statt nur einem Resultat ausgegeben. Dies erlaubt beispielsweise in einer Automatisierungsanlage ein beschleunigtes Reagieren auf einen nicht bestimmungsgemäßen Betriebszustand. Durch das Einbeziehen des Prozessparameters 45 ist durch die Künstliche Intelligenz 40 für die erste, zweite und dritte Komponente 31, 32, 33 präzise Prognose möglich, welche Konzentrationen 35 hiervon zu Beginn des zweiten Messzyklus 24 zu erwarten ist. Dies stellt ein selbsttätiges Weiterbilden des Trainingsdatensatzes 22 dar. Das in FIG 2 gezeigte Verfahren 100 wird mittels eines Computerprogrammprodukts 60 umgesetzt, das die Künstliche Intelligenz 40 und den Trainingsdatensatz 22 umfasst.

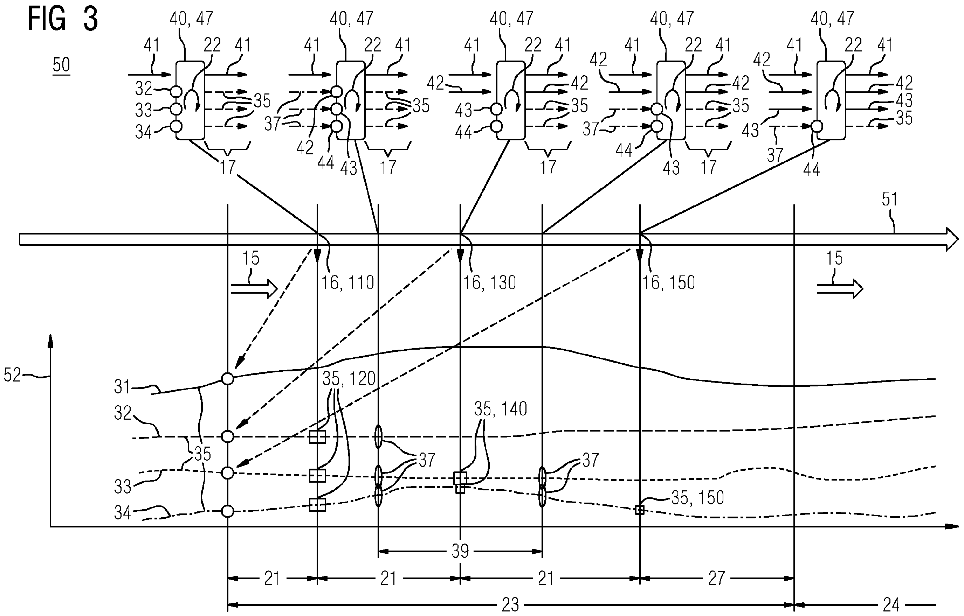

Eine zweite Ausführungsform des beanspruchten Verfahrens 100 ist FIG 3 schematisch dargestellt. Der Ablauf der zweiten Ausführungsform des beanspruchten Verfahrens 100 ist in einem Diagramm 50 dargestellt, das eine horizontale Zeitachse 51 aufweist. Im unteren Teil weist das Diagramm 50 eine vertikale Größenachse 52 auf, die einen Verlauf von Konzentrationen 35 darstellt. Im Diagramm 50 ist ein erster Messzyklus 23 dargestellt, in dem die Zusammensetzung 17 einer Stoffprobe 15 ermittelt wird, die eine erste Komponente 31, eine zweite Komponente 32, eine dritte Komponente 33 und eine Rest-Komponente 34 aufweist. Der Beginn des ersten Messzyklus 23 ist durch ein Injizieren der Stoffprobe 15 in eine Trennvorrichtung 14, wie in FIG 1 gezeigt, definiert. Nach einer Retentionszeit 21, die für die erste Komponente 31 in Kombination mit der Trennvorrichtung 14 charakteristisch ist, erreicht diese den Detektor 16 und wird in einem ersten Schritt 110 quantitativ erfasst. Das Resultat dieses Erfassens stellt einen ersten Teilmesswert 41 dar, der die Konzentration 35 der ersten Komponente 31 zu Beginn des ersten Messzyklus 23 wiedergibt. Der erste Teilmesswert 41 wird im ersten Schritt 110 auch an eine Künstliche Intelligenz 40 ausgegeben, die als Neuronales Netz 47 ausgebildet ist und den ersten Teilmesswert 41 als Eingabe nutzt.

Es folgt ein zweiter Schritt 120, in dem durch die Künstliche Intelligenz 40 basierend auf dem ersten Teilmesswert 41 die Zusammensetzung 17 der Stoffprobe 15 ermittelt wird. Wie in FIG 2 durch die leeren Kreise versinnbildlicht, liegen der Künstlichen Intelligenz 40 zum Zeitpunkt des ersten Schritts 110 keine Teilmesswerte für die zweite Komponente 32, die dritte Komponente 33 oder die Rest-Komponente 34 vor. Die Konzentrationen 35 der zweiten Komponente 32, der dritten Komponente 33 und der Rest-Komponente 34 werden im zweiten Schritt 120 mittels der Künstlichen Intelligenz 40, die durch einen Trainingsdatensatz 22 trainiert ist, ermittelt. Nach Abschluss des zweiten Schritts 120 liegt damit ein Resultat für die Zusammensetzung 17 der Stoffprobe 15 vor, die mit dem ersten Teilmesswert 41 auf einer realen Messung mit dem Detektor 16 basiert und drei Konzentrationen 35, die sich aus der Künstlichen Intelligenz 40 ergeben. Diese im zweiten Schritt 120 ermittelte Zusammensetzung 17 ist über eine Ausgabeeinheit 19 ausgebbar.

Zwischen dem zweiten Schritt 120 und einem dritten Schritt 130 des Verfahrens 100 erfolgt ein Ermitteln der Zusammensetzung 17 der Stoffprobe 15 mittels einer Hilfsanalysevorrichtung 20, wie in FIG 1 gezeigt. Durch die Hilfsanalysevorrichtung 20 wird jeweils für die zweite Komponente 32, die dritte Komponente 33 und die Rest-Komponente 34 ein Hilfsmesswert 37 erzeugt. Die Hilfsmesswerte 37 stellen die Konzentrationen 35 der entsprechenden Komponenten 32, 33, 34 dar, weisen jedoch im Vergleich zu Teilmesswerten 41, 42, 43 eine reduzierte Messgenauigkeit auf. Basierend auf dem ersten Teilmesswert 41 und den Hilfsmesswerten 37 für die zweite Komponente 32, die dritte Komponente 33 und die Rest-Komponente 34 wird durch die Künstliche Intelligenz 40 eine Zusammensetzung 17 der Stoffprobe 15 ermittelt. Dieses Resultat ist, analog dem Resultat aus dem zweiten Schritt 120, auch über die Ausgabeeinheit 19 ausgebbar.

Nach einem Ablauf einer weiteren Dauer, die durch eine Retentionszeit 21 der zweiten Komponente 32 in der Trennvorrichtung 14 charakterisiert ist, wird die zweite Komponente 32 durch den Detektor 16 quantitativ erfasst. Das quantitative Erfassen der zweiten Komponente 32 erfolgt in einem dritten Schritt 130. Durch das quantitative Erfassen im dritten Schritt 130 liegt ein zweiter Teilmesswert 42 vor, der die Konzentration 35 der zweiten Komponente 32 zu Beginn des ersten Messzyklus 23 wiedergibt. Der zweite Teilmesswert 42 wird hierbei an die Künstliche Intelligenz 40 ausgegeben, die diesen als weiteren Eingabe nutzt. Es folgt ein vierter Schritt 140, in dem der Künstlichen Intelligenz 40 der erste und zweite Teilmesswert 41, 42 vorliegen, jedoch keine Angaben über die Konzentrationen 35 der dritten Komponente 33 oder der Rest-Komponente 34, wie durch die leeren Kreise symbolisiert. Im vierten Schritt 14 werden über die Künstliche Intelligenz 40 basierend auf dem ersten und zweiten Teilmesswert 41, 42 die Konzentration 35 der dritten Komponente 33 und der Rest-Komponente 34 ermittelt. Hierbei stützt sich die Künstliche Intelligenz 40 auf ihren Trainingsdatensatz 22. Im vierten Schritt 140 wird eine Zusammensetzung 17 der Stoffprobe 15 zu Beginn des ersten Messzyklus 23 ermittelt, die auf den ersten und zweiten Teilmesswert 41, 42 beruht und durch Konzentrationen 35 für die dritte Komponente 33 und die Rest-Komponente 34 ergänzt werden, die durch die Künstliche Intelligenz 35 ermittelt sind. Dadurch, dass im vierten Schritt 140 bereits zwei Teilmesswerte 41, 42 vorliegen, sind die Konzentrationen 35 der dritten Komponente 33 und der Rest-Komponente 34 mit erhöhter Genauigkeit ermittelbar, insbesondere im Vergleich zum zweiten Schritt 120. Die im vierten Schritt 140 ermittelte Zusammensetzung 17 ist ebenfalls über eine Ausgabeeinheit 19 des Gaschromatographen 10 ausgebbar. Die Resultate für die Zusammensetzung 17, die sich im zweiten Schritt 120, im vierten Schritt 140 und dazwischen basierend auf den Hilfsmesswerten 37 ergeben, sind untereinander vergleichbar und so gegenseitig aus Plausibilität überprüfbar. Eine solche Plausibilitätsprüfung ist beispielsweise durchführbar, indem zwischen den ermittelten Konzentrationen 35 für korrespondierende Komponenten 32, 33, 34 der Stoffprobe 15 Differenzen gebildet werden und betragsmäßig ausgewertet werden. Hieraus ist ein nicht näher gezeigter Kennwert ermittelbar, der mit einem Anomalieschwellenwert zumindest betragsmäßig vergleichbar ist.

In analoger Weise wird zwischen dem dritten Schritt 130 und dem fünften Schritt 150 erneut mittels der Hilfsanalysevorrichtung 20 eine Zusammensetzung 17 der Stoffprobe 15 ermittelt und in Form von Hilfsmesswerten 37 der Künstlichen Intelligenz 40 zur Verfügung gestellt. Zwischen dem dritten und fünften Schritt 130, 150 werden nur Hilfsmesswerte 37 zu den Konzentrationen 35 der dritten Komponente 33 und der Rest-Komponente 34 ermittelt bzw. an die Künstliche Intelligenz 40 weitergeleitet. Basierend auf dem ersten und zweiten Teilmesswert 41, 42 und den Hilfsmesswerten 3 für die dritte Komponente 33 bzw. der Rest-Komponente 34 werden für diese durch die Künstliche Intelligenz 40 Konzentrationen 35 ermittelt. Diese Konzentrationen 35 bilden mit dem ersten und zweiten Teilmesswert 41, 42 eine Angabe über eine Zusammensetzung 17 der Stoffprobe 15. Die so ermittelte Zusammensetzung 17 ist über die Ausgabeeinheit 19 ausgebbar.

Analog zum ersten und dritten Schritt 110, 130 wird nach dem vierten Schritt 140 auch ein fünfter Schritt 150 durchgeführt, in dem eine Konzentration 35 der dritten Komponente 33 mittels des Detektor 16 ermittelt wird. Das Resultat des fünften Schritts 150 wird als dritter Teilmesswert 43 an die Künstliche Intelligenz 40 weitergeleitet, diesen als Eingabe nutzt. Unter Berücksichtigung des ersten, zweiten und dritten Teilmesswerts 41, 42, 43 wird von der Künstlichen Intelligenz 40 unter Einbeziehung des Prozessparameters 45 im fünften Schritt 150 auch eine Konzentration 35 für die Rest-Komponente 44 ermittelt. Hieraus ergibt sich eine Zusammensetzung 17 der Stoffprobe 15, die drei Teilmesswerte 41, 42, 43 umfasst und eine durch die Künstliche Intelligenz 40 ermittelte Konzentration 35 für die Rest-Komponente 34. Die so erhaltene Zusammensetzung 17 ist ebenfalls über die Ausgabeeinheit 19 des Gaschromatographen 10 ausgebbar.

Die Hilfsanalysevorrichtung 20 weist, wie in FIG 3 gezeigt, dazu geeignet, eine Messtaktdauer 39 auf, die kürzer ist als der erste Messzyklus 23. Die Hilfsanalysevorrichtung 20 ist dazu geeignet, mehrmals pro Messzyklus 23, 24 Hilfsmesswerte 37 an die Künstliche Intelligenz 40 auszugeben. Die Hilfsmesswerte 37 werden jeweils zwischen dem Erfassen von zwei Teilmesswerten 41, 42, 43 ermittelt. Dadurch wird zusätzlich zu den im zweiten, vierten und fünften Schritt 120, 140, 150 ermittelten Zusammensetzungen 17 zusätzliche Zusammensetzungen 17 ermittelt. Nach FIG 3 werden somit pro Messzyklus 23, 24 fünf Zusammensetzungen 17 ermittelt. Die Hilfsmesswerte 37 und die ausgehend hiervon ermittelten Konzentrationen 35 sind speicherbar und können dem Trainingsdatensatz 22 der Künstlichen Intelligenz 40 hinzugefügt werden. Eine solche Anreicherung des Trainingsdatensatzes 22 führt zu einem beschleunigten maschinellen Lernen der Künstlichen Intelligenz.

An den fünften Schritt 150 schließt sich eine inaktive Phase 27 an, in der keine weiteren Messungen mehr vorgenommen werden. In der inaktiven Phase 27 kann die Trennvorrichtung 14, wie in FIG 1 gezeigt, gespült werden. Alternativ kann der Eintritt der inaktiven Phase 27 durch die Künstliche Intelligenz 40 erkannt werden und dementsprechend verkürzt werden. Die inaktive Phase 27, und damit auch der erste Messzyklus 23, endet mit dem Beginn des zweiten Messzyklus 24. Der zweite Messzyklus 24 beginnt, wenn eine neue Stoffprobe 15 injiziert wird. Die im Hinblick auf den ersten Messzyklus 23 dargestellten Schritte 110, 120, 130, 140, 150 und die Verwendung der Hilfsanalysevorrichtung 20 sind analog auf den zweiten Messzyklus 24 übertragbar.

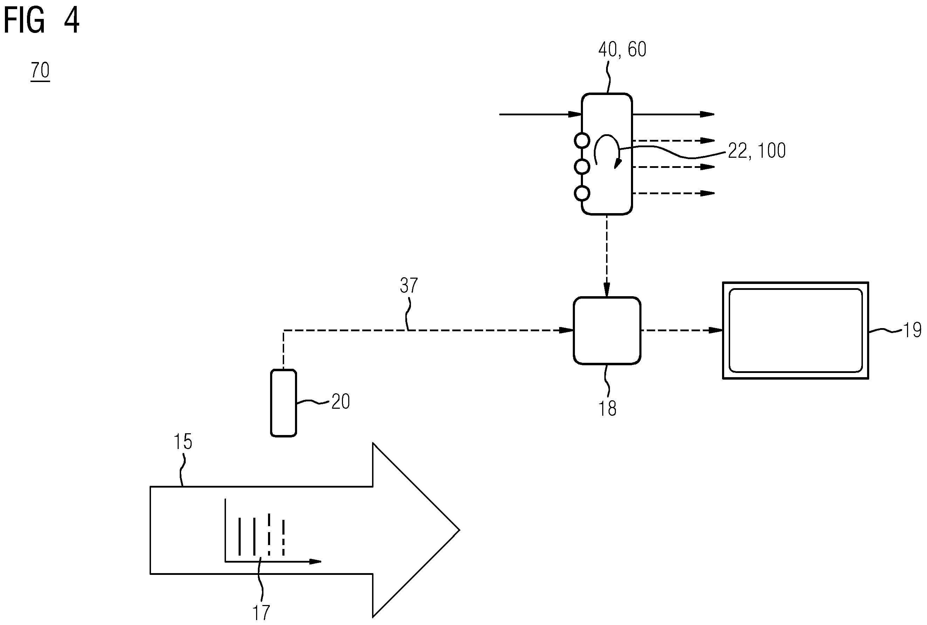

FIG 4 zeigt eine Ausführungsform des beanspruchten Analysesystems 70, das eine Hilfsanalysevorrichtung 20 aufweist, die als Raman-Spektrometer oder als Kontinuierlicher Gasanalysator ausgebildet ist. Die Hilfsanalysevorrichtung 20 ist mit einer Auswertungseinheit 18 verbunden. Ferner ist die Hilfsanalysevorrichtung 20 dazu ausgebildet, eine Stoffprobe 15, die als Stofffluss ausgebildet ist, auf ihre Zusammensetzung 17 hin zu untersuchen. Entsprechende Messdaten werden als Hilfsmesswerte 37 an die Auswertungseinheit 18 übertragen. Die Auswertungseinheit 18 ist mit einer Künstliche Intelligenz 40 zum Ermitteln der Zusammensetzung 17 ausgestattet. Die Künstliche Intelligenz 40 ist anhand eines Trainingsdatensatzes 22 trainiert, also zum Ermitteln der Zusammensetzung 17 der Stoffprobe 15, eingerichtet. Der Trainingsdatensatz 22 ist zumindest teilweise aus einem Verfahren 100 gemäß einer der oben beschriebenen Ausführungsformen erzeugt. Damit ist die Künstliche Intelligenz 40 zumindest teilweise durch ein solches Verfahren 100 trainiert. Die Künstliche Intelligenz 40 ist infolgedessen, frei von einem Detektor 16 wie in einem Gaschromatographen 10 nach FGI 1 die Zusammensetzung 17 der Stoffprobe 15 mit erhöhter Präzision zu ermitteln. Das Analysesystem 70 in FIG 4 ist als virtueller Gaschromatograph aufzufassen, der frei von Detektoren 16, also frei von realen Gaschromatographen 10, eine ähnliche oder gleichwertige Messgenauigkeit bietet. Das Analysesystem 70 ist besonders kosteneffizient und dazu geeignet, die Funktionalität eines realen Gaschromatographen 10 wie in FIG 1 bei reduziertem Hardwareaufwand bereitzustellen.

## Patentansprüche

1. Verfahren (100) zum Ermitteln einer Zusammensetzung einer Stoffprobe (15) mit mindestens drei Komponenten (31, 32, 33, 34) mittels eines Gaschromatographen (10), umfassend die Schritte:
a) Quantitatives Ermitteln einer Konzentration (35) einer ersten Komponente (31) der Stoffprobe (15) und Ausgeben der Konzentration (35) als einen ersten Teilmesswert (41) an eine Künstliche Intelligenz (40);
**dadurch gekennzeichnet, dass** das Verfahren (100) weiter die Schritte umfasst:
b) Ermitteln einer Konzentration (35) der zweiten und dritten Komponente (32, 33) der Stoffprobe (15) mittels der Künstlichen Intelligenz (40) anhand des ersten Teilmesswerts (41) und Ausgeben der ermittelten Konzentrationen (35) ;
c) Quantitatives Ermitteln einer Konzentration (35) der zweiten Komponente (32) der Stoffprobe (15) und Ausgeben der Konzentration (35) als einen zweiten Teilmesswert (42) an die Künstliche Intelligenz (40);
d) Ermitteln der Konzentration (35) der dritten Komponente (33) der Stoffprobe (15) mittels der Künstlichen Intelligenz (40) anhand des ersten und zweiten Teilmesswerts (41, 42) und Ausgeben der ermittelten Konzentration (35);
wobei die Schritte a) bis d) innerhalb eines ersten Messzyklus (23) des Gaschromatographen (10) durchführt werden, in dem die Stoffprobe (15) untersucht wird.

2. Verfahren (100) zum Ermitteln einer Zusammensetzung einer Stoffprobe (15) nach Anspruch 1, **dadurch gekennzeichnet, dass** die Künstliche Intelligenz (40) als Neuronales Netz (47), als Fuzzy-Logik und/oder als Statistikmodul ausgebildet ist.

3. Verfahren (100) zum Ermitteln einer Zusammensetzung einer Stoffprobe (15) nach Anspruch 1 oder 2, **dadurch gekennzeichnet, dass** die Künstliche Intelligenz (40) durch einen Trainingsdatensatz (22) trainiert ist.

4. Verfahren (100) zum Ermitteln einer Zusammensetzung einer Stoffprobe (15) nach Anspruch 3, **dadurch gekennzeichnet, dass** der Trainingsdatensatz (22) Daten über historische Ermittlungen von Zusammensetzungen (17) von Stoffproben (15) auf bautypengleichen oder bautypenähnlichen Gaschromatographen (10) umfasst.

5. Verfahren (100) zum Ermitteln einer Zusammensetzung einer Stoffprobe (15) nach einem der Ansprüche 1 bis 4, **dadurch gekennzeichnet, dass** in einem Schritt e) ein quantitatives Ermitteln der Konzentration (35) der dritten Komponente (33) der Stoffprobe (15) erfolgt und die Konzentration (35) der dritten Komponente (33) als dritter Teilmesswert (43) ausgegeben wird.

6. Verfahren (100) zum Ermitteln einer Zusammensetzung einer Stoffprobe (15) nach einem der Ansprüche 1 bis 5, **dadurch gekennzeichnet, dass** Teilmesswerte (41, 42, 43) und korrespondierende über die Künstliche Intelligenz (40) ermittelte Konzentrationen (35) von Komponenten (31, 32, 33, 34) der Stoffprobe (15) zu einem maschinellen Lernen der Künstlichen Intelligenz (40) bereitgestellt werden.

7. Verfahren (100) zum Ermitteln einer Zusammensetzung einer Stoffprobe (15) nach einem der Ansprüche 1 bis 6, **dadurch gekennzeichnet, dass** in einem Schritt f) eine Konzentration (35) einer Rest-Komponente (34) der Stoffprobe (15) erfasst wird und eine Warnung ausgegeben wird, wenn die Konzentration (35) der Rest-Komponente (34) einen einstellbaren Schwellenwert (44) übersteigt.

8. Verfahren (100) zum Ermitteln einer Zusammensetzung einer Stoffprobe (15) nach einem der Ansprüche 1 bis 7, **dadurch gekennzeichnet, dass** die über die Künstliche Intelligenz (40) ermittelte Konzentrationen (35) der zweiten und/oder dritten Komponente (32, 33) der Stoffprobe (15) mit einer Fehlerspanne und/oder einem Konfidenzintervall ausgegeben werden.

9. Verfahren (100) zum Ermitteln einer Zusammensetzung einer Stoffprobe (15) nach einem der Ansprüche 1 bis 8, **dadurch gekennzeichnet, dass** zwischen einer über die Künstliche Intelligenz (40) ermittelten Konzentration (35) einer Komponente (31, 32, 33) und dem korrespondierenden Teilmesswert (41, 42, 43) eine Differenz ermittelt wird und eine Warnung ausgegeben wird, wenn die Differenz einen einstellbaren Anomalieschwellenwert betragsmäßig übersteigt.

10. Verfahren (100) zum Ermitteln einer Zusammensetzung einer Stoffprobe (15) nach einem der Ansprüche 1 bis 9, **dadurch gekennzeichnet, dass** der Schritt b) und/oder d) unter Berücksichtigung eines Prozessparameters (45) durchgeführt wird.

11. Verfahren (100) zum Ermitteln einer Zusammensetzung einer Stoffprobe (15) nach Anspruch 10, **dadurch gekennzeichnet, dass** der Prozessparameter (45) eine Temperatur, ein Druck, ein pH-Wert und/oder eine elektrische Größe ist.

12. Verfahren (100) zum Ermitteln einer Zusammensetzung einer Stoffprobe (15) nach einem der Ansprüche 1 bis 11, **dadurch gekennzeichnet, dass** während des ersten Messzyklus (23) für die Konzentration (35) zumindest einer Komponente (31, 32, 33, 34) der Stoffprobe (15) ein Hilfsmesswert (37) einer Hilfsanalysevorrichtung (20) bereitgestellt wird.

13. Verfahren (100) zum Ermitteln einer Zusammensetzung einer Stoffprobe (15) nach Anspruch 10, **dadurch gekennzeichnet, dass** die Hilfsanalysevorrichtung (20) eine Messtaktdauer (39) aufweist, die kürzer ist als der erste Messzyklus (23).

14. Computerprogrammprodukt (60) zum Ermitteln einer Zusammensetzung einer Stoffprobe (15), das eine Künstliche Intelligenz (40) und einen veränderlichen Trainingsdatensatz (22) umfasst, **dadurch gekennzeichnet, dass** das Computerprogrammprodukt (60) Befehle umfasst, welche die Auswerteeinheit von Anspruch 15 zu einem Durchführen zumindest eines Verfahrens (100) nach einem der Ansprüche 1 bis 13 veranlassen.

15. Auswertungseinheit (18) für eine Analysevorrichtung (10), die zu einem Ermitteln einer Zusammensetzung (17) einer Stoffprobe (15) ausgebildet ist und mit zumindest einem Detektor (16) verbindbar ist, **dadurch gekennzeichnet, dass** die Auswertungseinheit (18) zur Durchführung zumindest eines Verfahrens (100) nach einem der Ansprüche 1 bis 13 ausgebildet ist.

16. Gaschromatograph (10) zum Ermitteln einer Zusammensetzung (17) einer Stoffprobe (15), der über zumindest eine Trennvorrichtung (14) und einen Detektor (16) verfügt, wobei der Detektor (16) mit einer Auswertungseinheit (18) verbunden ist, **dadurch gekennzeichnet, dass** die Auswertungseinheit (18) nach Anspruch 15 ausgebildet ist.

17. Analysesystem (70) zum Ermitteln einer Zusammensetzung (17) einer Stoffprobe (15), umfassend eine Hilfsanalysevorrichtung (20), die als Raman-Spektrometer oder Kontinuierlicher Gasanalysator ausbildet ist und mit einer Auswertungseinheit (18) verbunden ist, in der eine Künstliche Intelligenz (40) ausführbar gespeichert ist, **dadurch gekennzeichnet, dass** die Auswertungseinheit (18) nach Anspruch 15 ausgebildet ist.

## Claims

1. Method (100) for ascertaining a composition of a substance sample (15) with at least three components (31, 32, 33, 34) by means of a gas chromatograph (10), comprising the steps:
a) quantitatively ascertaining a concentration (35) of a first component (31) of the substance sample (15) and outputting the concentration (35) as a first partial measured value (41) to an artificial intelligence (40);
**characterised in that** the method (100) further comprises the steps:
b) ascertaining a concentration (35) of the second and third component (32, 33) of the substance sample (15) by means of the artificial intelligence (40) using the first partial measured value (41) and outputting the ascertained concentrations (35);
c) quantitatively ascertaining a concentration (35) of the second component (32) of the substance sample (15) and outputting the concentration (35) as a second partial measured value (42) to the artificial intelligence (40);
d) ascertaining the concentration (35) of the third component (33) of the substance sample (15) by means of the artificial intelligence (40) using the first and second partial measured value (41, 42) and outputting the ascertained concentration (35);
wherein steps a) to d) are performed within a first measurement cycle (23) of the gas chromatograph (10) in which the substance sample (15) is analysed.

2. Method (100) for ascertaining a composition of a substance sample (15) according to claim 1, **characterised in that** the artificial intelligence (40) is embodied as a neural network (47), as fuzzy logic and/or as a statistics module.

3. Method (100) for ascertaining a composition of a substance sample (15) according to claim 1 or 2, **characterised in that** the artificial intelligence (40) is trained by a training dataset (22).

4. Method (100) for ascertaining a composition of a substance sample (15) according to claim 3, **characterised in that** the training dataset (22) comprises data on historical ascertainments of compositions (17) of substance samples (15) on gas chromatographs (10) of the same or similar construction.

5. Method (100) for ascertaining a composition of a substance sample (15) according to one of claims 1 to 4, **characterised in that**, in a step e), the concentration (35) of the third component (33) of the substance sample (15) is ascertained quantitatively and the concentration (35) of the third component (33) is output as a third partial measured value (43).

6. Method (100) for ascertaining a composition of a substance sample (15) according to one of claims 1 to 5, **characterised in that** partial measured values (41, 42, 43) and corresponding concentrations (35) of components (31, 32, 33, 34) of the substance sample (15) ascertained by the artificial intelligence (40) are provided for machine learning of the artificial intelligence (40).

7. Method (100) for ascertaining a composition of a substance sample (15) according to one of claims 1 to 6, **characterised in that**, in a step f), a concentration (35) of a residual component (34) of the substance sample (15) is detected and a warning is issued if the concentration (35) of the residual component (34) exceeds an adjustable threshold value (44).

8. Method (100) for ascertaining a composition of a substance sample (15) according to one of claims 1 to 7, **characterised in that** the concentrations (35) of the second and/or third component (32, 33) of the substance sample (15) ascertained by the artificial intelligence (40) are output with an error margin and/or a confidence interval.

9. Method (100) for ascertaining a composition of a substance sample (15) according to one of claims 1 to 8, **characterised in that** a difference is ascertained between a concentration (35) of a component (31, 32, 33) ascertained by the artificial intelligence (40) and the corresponding partial measured value (41, 42, 43) and a warning is issued if the difference exceeds an adjustable anomaly threshold value in terms of amount.

10. Method (100) for ascertaining a composition of a substance sample (15) according to one of claims 1 to 9, **characterised in that** step b) and/or d) is performed taking account of a process parameter (45).

11. Method (100) for ascertaining a composition of a substance sample (15) according to claim 10, **characterised in that** the process parameter (45) is a temperature, a pressure, a pH value and/or an electrical quantity.

12. Method (100) for ascertaining a composition of a substance sample (15) according to one of claims 1 to 11, **characterised in that** an auxiliary measured value (37) of an auxiliary analysis apparatus (20) is provided during the first measurement cycle (23) for the concentration (35) of at least one component (31, 32, 33, 34) of the substance sample (15).

13. Method (100) for ascertaining a composition of a substance sample (15) according to claim 10, **characterised in that** the auxiliary analysis apparatus (20) has a measurement cycle duration (39) that is shorter than the first measurement cycle (23).

14. Computer program product (60) for ascertaining a composition of a substance sample (15) comprising an artificial intelligence (40) and a variable training dataset (22), **characterised in that** the computer program product (60) comprises commands, which prompts the evaluation unit from claim 15 to perform at least one method (100) according to one of claims 1 to 13.

15. Evaluation unit (18) for an analysis apparatus (10), which is embodied to ascertain a composition (17) of a substance sample (15) and can be connected to at least one detector (16), **characterised in that** the evaluation unit (18) is embodied to perform at least one method (100) according to one of claims 1 to 13.

16. Gas chromatograph (10) for ascertaining a composition (17) of a substance sample (15), which has at least one separating apparatus (14) and one detector (16), wherein the detector (16) is connected to an evaluation unit (18), **characterised in that** the evaluation unit (18) is embodied according to claim 15.

17. Analysis system (70) for ascertaining a composition (17) of a substance sample (15), comprising an auxiliary analysis apparatus (20), which is embodied as a Raman spectrometer or continuous gas analyser and connected to an evaluation unit (18), in which an executable artificial intelligence (40) is stored, **characterised in that** the evaluation unit (18) is embodied according to claim 15.

## Revendications

1. Procédé (100) de détermination de la composition d'un échantillon (15) de matière ayant au moins trois constituants (31, 32, 33, 34), au moyen d'un chromatographe (10) en phase gazeuse, comprenant les stades :
a) on détermine quantitativement une concentration (35) d'un premier constituant (31) de l'échantillon (15) de matière et on donne la concentration (35) sous la forme d'une première valeur (41) partielle de mesure à une intelligence (40) artificielle ;
**caractérisé en ce que** le procédé (100) comprend en outre les stades :
b) on détermine une concentration (35) du deuxième et du troisième constituants (32, 33) de l'échantillon (15) de matière au moyen de l'intelligence (40) artificielle à l'aide de la première valeur (41) partielle de mesure et on donne les concentrations (35) déterminées ;
c) on détermine quantitativement une concentration (35) du deuxième constituant (32) de l'échantillon (15) de matière et on donne la concentration (35) sous la forme d'une deuxième valeur (42) partielle de mesure à l'intelligence (40) artificielle ;
d) on détermine la concentration (35) du troisième constituant (33) de l'échantillon (15) de matière au moyen de l'intelligence (40) artificielle, à l'aide de la première et de la deuxième valeurs (41, 42) partielles de mesure et on donne la concentration (35) déterminée ;
dans lequel on effectue les stades a) à d) dans un premier cycle (23) de mesure du chromatographe (10) en phase gazeuse, dans lequel on étudie l'échantillon (15) de matière.

2. Procédé (100) de détermination de la composition d'un échantillon (15) suivant la revendication 1, **caractérisé en ce que** l'intelligence (40) artificielle est constituée sous la forme d'un réseau (47) neuronal, d'une logique floue et/ou d'un module statistique.

3. Procédé (100) de détermination de la composition d'un échantillon (15) suivant la revendication 1 ou 2, **caractérisé en ce que** l'intelligence (40) artificielle subit un apprentissage par un ensemble (22) de données d'apprentissage.

4. Procédé (100) de détermination de la composition d'un échantillon (15) suivant la revendication 3, **caractérisé en ce que** l'ensemble (22) de données d'apprentissage comprend des données sur des déterminations dans le passé de compositions (17) d'échantillons (15) de matière sur des chromatographes (10) en phase gazeuse de même type de construction ou de type de construction semblable.

5. Procédé (100) de détermination de la composition d'un échantillon (15) suivant l'une des revendications 1 à 4, **caractérisé en ce que** dans un stade e) on effectue une détermination quantitative de la concentration (35) du troisième constituant (33) de l'échantillon (15) de matière et on donne la concentration (35) du troisième constituant (33) sous la forme d'une troisième valeur (43) partielle de mesure.

6. Procédé (100) de détermination de la composition d'un échantillon (15) suivant l'une des revendications 1 à 5, **caractérisé en ce que** l'on met des valeurs (41, 42, 43) partielles de mesure et des concentrations (35) correspondantes, déterminées par l'intelligence (40) artificielle, de constituants (31, 32, 33, 34) de l'échantillon (15) de matière à la disposition d'un enseignement par machine de l'intelligence (40) artificielle.

7. Procédé (100) de détermination de la composition d'un échantillon (15) suivant l'une des revendications 1 à 6, **caractérisé en ce que** dans un stade f) on détecte une concentration (35) d'un constituant (34) résiduel de l'échantillon (15) de matière et on lance une alerte, si la concentration (35) du constituant (34) résiduel dépasse une valeur (44) de seuil réglable.

8. Procédé (100) de détermination de la composition d'un échantillon (15) suivant l'une des revendications 1 à 7, **caractérisé en ce que** l'on donne les concentrations (35), déterminées par l'intelligence (40) artificielle, des deuxième et/ou troisième constituants (32, 33) de l'échantillon (15) de matière avec une marge d'erreur et/ou un intervalle de confiance.

9. Procédé (100) de détermination de la composition d'un échantillon (15) suivant l'une des revendications 1 à 8, **caractérisé en ce que** l'on détermine une différence entre une concentration (35) d'un constituant (31, 32, 33) déterminée par l'intelligence (40) artificielle et la valeur (41, 42, 43) partielle de mesure correspondante et on lance une alerte, si la différence dépasse en valeur absolue une valeur de seuil d'anomalie réglable.

10. Procédé (100) de détermination de la composition d'un échantillon (15) suivant l'une des revendications 1 à 9, **caractérisé en ce que** l'on effectue les stades b) et/ou d) en tenant compte d'un paramètre (45) de processus.

11. Procédé (100) de détermination de la composition d'un échantillon (15) suivant la revendication 10, **caractérisé en ce que** le paramètre (45) de processus est une température, une pression, une valeur de pH et/ou une grandeur électrique.

12. Procédé (100) de détermination de la composition d'un échantillon (15) suivant l'une des revendications 1 à 11, **caractérisé en ce que** pendant le premier cycle (23) de mesure de la concentration (35) d'au moins un constituant (31, 32, 33, 34) de l'échantillon (15) de matière, on met une valeur (37) auxiliaire de mesure à disposition d'un dispositif (20) auxiliaire d'analyse.

13. Procédé (100) de détermination de la composition d'un échantillon (15) suivant la revendication 10, **caractérisé en ce que** le dispositif (20) auxiliaire d'analyse a une durée (39) de cadence de mesure, qui est plus brève que le premier cycle (23) de mesure.

14. Produit (60) de programme d'ordinateur pour la détermination d'une composition d'un échantillon (15) de matière, qui comprend une intelligence (40) artificielle et un ensemble (22) de données d'apprentissage pouvant être modifié, **caractérisé en ce que** le produit (60) de programme d'ordinateur comprend des instructions qui font que l'unité d'évaluation de la revendication 15 effectue au moins un procédé (100) suivant l'une des revendications 1 à 13.

15. Unité (18) d'évaluation d'un dispositif (10) d'analyse, qui est constituée pour une détermination d'une composition (17) d'un échantillon (15) de matière et qui peut être reliée à au moins un détecteur (16), **caractérisée en ce que** l'unité (18) d'évaluation est constituée pour effectuer au moins un procédé (100) suivant l'une des revendications 1 à 13.

16. Chromatographe (10) en phase gazeuse pour la détermination d'une composition (17) d'un échantillon (15) de matière, qui dispose d'au moins un dispositif (14) de séparation et d'un détecteur (16), dans lequel le détecteur (16) est relié à une unité (18) d'évaluation, **caractérisé en ce que** l'unité (18) d'évaluation est constituée suivant la revendication 15.

17. Système (70) d'analyse pour la détermination de la composition (17) d'un échantillon (15) de matière, comprenant un dispositif (20) auxiliaire d'analyse, qui est constitué sous la forme d'un spectromètre Raman ou d'un analyseur de gaz en continu et qui est relié à une unité (18) d'évaluation, dans laquelle une intelligence (40) artificielle est mise en mémoire avec possibilité de l'exécuter, **caractérisé en ce que** l'unité (18) d'évaluation est constituée suivant la revendication 15.
